# EUROPÄISCHE PATENTSCHRIFT

(11) **EP 0 669 050 B1**
(45) Veröffentlichungstag und Bekanntmachung des Hinweises auf die Patenterteilung: **14.05.1997**
(21) Anmeldenummer: 93920848.4
(22) Anmeldetag: 30.09.1993
(51) Int. Cl.: H02K 1/06, H02K 1/16, H02K 3/00

(54) **VERFAHREN ZUR HERSTELLUNG EINER MEHRPHASIGEN VOLLPOLMASCHINE**
PROCESS FOR PRODUCING A MULTI-PHASE MACHINE WITH NON-SALIENT POLES
PROCEDE DE FABRICATION D'UNE MACHINE A POLES LISSES POLYPHASEE

(30) Priorität: 09.10.1992 DE 4234108
(43) Veröffentlichungstag der Anmeldung: 30.08.1995
(73) Patentinhaber: HILL, Wolfgang, 76135 Karlsruhe (DE)
(72) Erfinder: HILL, Wolfgang, 76135 Karlsruhe (DE)
(86) Internationale Anmeldenummer: EP9302677
(87) Internationale Veröffentlichungsnummer: WO9409546

(56) Entgegenhaltungen:
- WO-A-91/15892
- CH-A- 391 071
- DE-A- 2 033 235
- GB-A- 1 098 125
- US-A- 3 827 141
- PATENT ABSTRACTS OF JAPAN vol. 10, no. 319 (E-450)(2375) 30. Oktober 1986 ; & JP-A-61 128 750

## Beschreibung

Die Erfindung betrifft ein Verfahren zur Herstellung einer mehrphasigen elektrischen Maschine gemäß dem Oberbegriff des Anspruchs 1.

In einem Leiteraufbau für eine mehrphasige Vollpolmaschine überschneiden sich die Phasenstränge in den Wickelköpfen, wodurch die Herstellung gegenüber einphasigen oder konzentrierten Wicklungen wesentlich komplizierter wird. Zur Erhöhung der Leistungsdichte und des Wirkungsgrades elektrischer Maschinen sind ein hoher Füllfaktor in den Nuten und kurze Verbindungswege in den Wickelköpfen wesentliche Voraussetzungen.

In der ***DE-OS 2 223 906*** werden die sich überlappenden Leiterstränge auf die zunächst von einer Vorrichtung in ihrer endgültigen Position fixierten Zähne gewickelt, wobei das Einlegen der Leiter beim Innenläufer aufgrund des erst nachträglich aufgepreßten Rückschlußes durch eine vergrößerte Öffnung am Nutboden möglich ist.

Aus der ***DE-OS 2 033 235*** ist ein Verfahren bekannt in dem weichmagnetische Segmente radial in eine mehrphasige Zweischichtwicklung eingesetzt werden, wobei die Drahtspulen bei der Montage verformbar sein müssen und die Stabilität des Aufbaus durch nachträgliches Vergießen mit einem Isolierharz gewährleistet wird. Kurze Weglängen für den elektrischen und magnetischen Fluß sind in diesem Verfahren nicht erreichbar. Weiterhin erfordert das Einsetzen der Segmente ein hohes Maß an Geschicklichkeit und ist nur aufwendig zu automatisieren.

In der ***GB-A 1 098 125*** und in der ***JP-A 61 128 750*** wird eine vorgefertigte Wicklung axial in einen Jochring eingeschoben, in den anschließend T-förmige Zahnsegmente radial von innen eingepreßt werden. Diese Verfahren zeichnen sich durch die Aufteilung des weichmagnetischen Körpers in einen Jochring und Zahnsegmente aus. Hierdurch sind geringe Nutspaltweiten realisierbar und die Zahnsegmente sind mit geringem Verschnitt auch aus kornorientiertem Material herstellbar.Bei der möglicht kostengünstigen Vorfertigung der Wicklung sind spezielle Verfahrensschritte nicht vorgesehen.

Bereits aus der ***DE-PS 680 038*** ist ein Herstellungsverfahren für eine mehrphasige elektrische Maschine bekannt, in dem das genutete Ständerblechpaket aus lamellierten Paketsektoren, die in Umfangsrichtung eine Nutteilung einnehmen, zusammengesetzt wird. Die Wicklung kann unabhängig vom Eisenkörper vorgefertigt werden, wobei die Wicklung in die Lücken zwischen den Zahnrippen eines als Widerlager dienenden Hilfszylinders eingelegt wird. Die unabhängig vom Ankerblechpaket vorgefertigte Wicklung kann mit Leichtigkeit in wesentlich kürzerer Zeit hergestellt und bequem mit einer Umhüllung versehen werden.

Der Erfindung liegt die Aufgabe zugrunde, ein Verfahren zur Herstellung einer mehrphasigen elektrischen Maschine, deren Leiterstränge sich in den Wickelköpfen überlappen, derart weiter zu bilden, daß in wenigen gut automatisierbaren Arbeitsschritten in den Nuten und Wickelköpfen ein hoher Füllfaktor und kurze Leiterlängen, sowie eine gute Materialausnutzung und einfache Wiederverwertung der eingesetzten Rohstoffe erreicht wird.

Diese Aufgabe wird erfindungsgemäß durch die kennzeichnenden Merkmale des Anspruchs 1 gelöst. Wicklungen aus Rund- oder Profildrähten, Formspulen oder Vierkantstäben werden erfindungsgemäß vor dem Einsetzen der weichmagnetischen Segmente selbsttragend vorgefertigt, wobei die Leiter innerhalb einer Vorrichtung vor dem Aushärten eines Bindemittels von der Mittelachse der Zähne ausgehend in axialer - bei Drahtwicklungen auch in tangentialer und/oder radialer - Richtung komprimiert werden. Im Verfahren wird somit die entfallende Einschränkung durch den weichmagnetischen Körper dazu genutzt, um besonders kompakte Wicklungen selbsttragend vorzufertigen. Durch die verbesserte Raumausnutzung bauen die Maschinen bei gleichen Leistungs- und Wirkungsgradvorgaben kleiner und leichter.

Wenn die Zähne innerhalb des Jochs angeordnet sind und die Zahnbreite zum Luftspalt hin konstant bleibt, reicht eine T-förmige Segmentbauform aus. Bei außerhalb des Jochs angeordneten Zähnen sind zwei T-förmige Segmentbauformen notwendig.

Soll die Zahnbreite dagegen zum Luftspalt hin zunehmen, sind jeweils eine Zahn- und eine Jochsegmentbauform notwendig, wobei die Zahnsegmente durch ihre sich trapezförmig verbreiternden Enden auf der Jochseite entweder durch die Jochsegmente selbst oder durch einen am Joch anliegenden Trägerring mit entsprechenden Nuten radial fixiert werden.

Die in den Leiteraufbau eingeschobenen Segmente sind jederzeit wieder demontierbar, ohne die Wicklung zu zerstören. Hierdurch ergeben sich neuartige Reparaturmöglichkeiten und die Trennung von Kupfer und Eisen kann durch eine Demontage vollautomatisch, ohne Rückstände oder aufwendige Schneide- und Schmelzprozesse erfolgen.

In der Beschreibung wird von einer bürstenlosen Radialluftspaltmaschine ausgegangen, deren mehrphasige Wicklung im Stator angeordnet ist. Das Herstellungsverfahren gilt natürlich ebenfalls für mechanisch kommutierte Maschinen, bei denen die Wicklung rotiert, oder für Maschinen mit ebenem Luftspalt oder mit einem Kurzschlußläufer.
Die ***Zeichnungen*** stellen vorteilhafte Ausführungsformen der Erfindung dar.
- Figur 1: zeigt die vier Einheitenschichten einer vierphasigen, zwölfpoligen Stabwicklung beim axialen Ineinanderschieben;
- Figur 2: zeigt das Anfügen der Verbindungsleiterschichten an die Einheiten aus Fig. 1;
- Figur 3: zeigt die axial zusammengeschobene, selbsttragend vorgefertigte Stabwicklung;
- Figur 4: zeigt eine Vorrichtung zur Herstellung einer selbsttragenden Drahtwicklung;
- Figur 5: zeigt eine Variante zu Fig. 4;
- Figur 6: zeigt vier T-förmige Zahnsegmente beim Einsetzen in eine selbsttragend vorgefertigte Stabwicklung;
- Figur 7: zeigt Zahnsegmente und Jochsegmente beim Einsetzen in eine selbsttragend vorgefertigte Drahtwicklung;
- Figur 8: zeigt schematisch das Herstellungsverfahren für einen weichmagnetischen Körper;

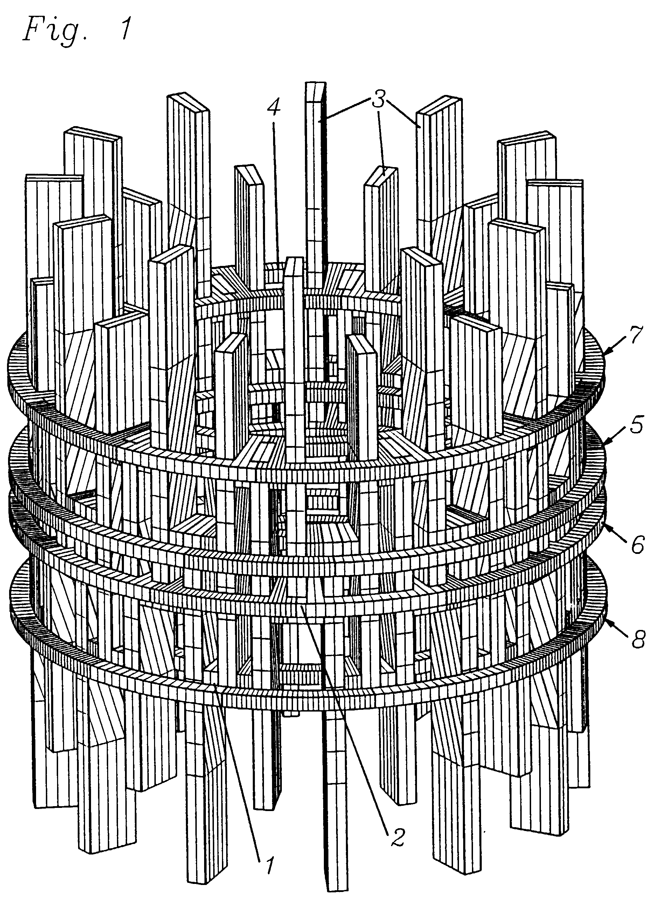

In den *Figuren 1 bis 3* werden drei Arbeitsschritte bei der Herstellung einer selbsttragenden Stabwicklung für eine zwölfpolige, vierphasige Radialluftspaltmaschine dargestellt.

**Figur 1** zeigt wie zuvor zu Schichten zusammengefügte Einheiten **1, 2** axial ineinander geschoben werden. Die zwei Einheitenbauformen **1, 2** werden vorgefertigt, indem jeweils zwei Kunststäbe 3 an Verbindungsleiter **4** angeschweißt werden. Die vier Einheitenstegschichten **5** bis **8** bestehen jeweils aus baugleichen Leiterformteilen, die wiederum zu einem Leiterstrang bzw. zu einer Phase gehören.

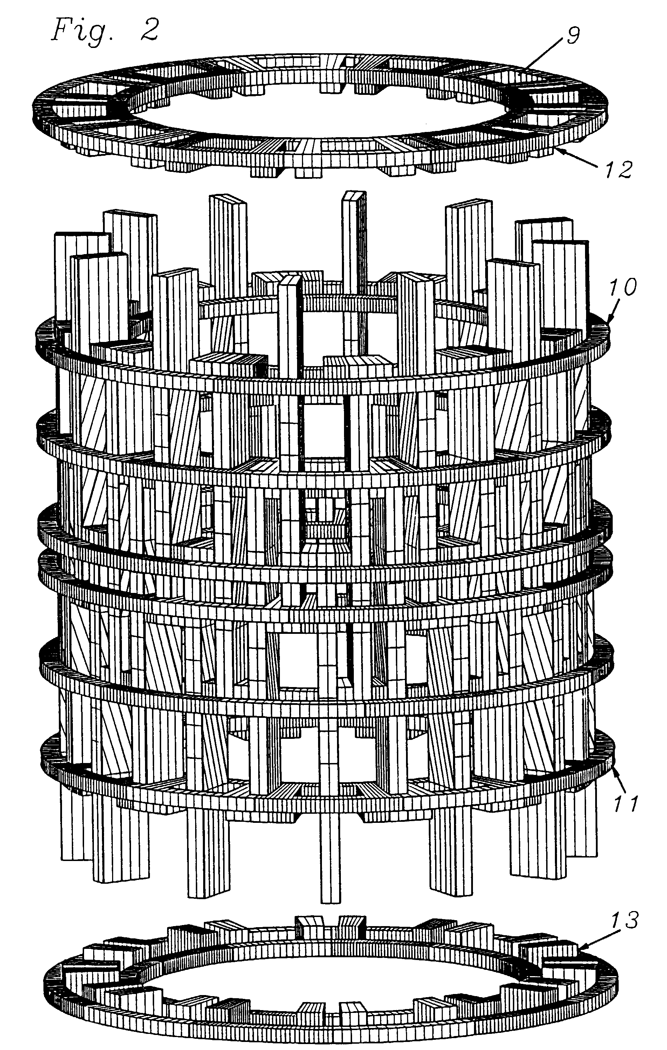

In **Figur 2** werden nun die äußeren Verbindungsleiter **9**, die ebenfalls zuvor tangential zu Schichten zusammengeklebt wurden, auf die Einheitenenden axial aufgepreßt. Die Verbindungsleiterschichten **10** bis **13** bestehen bis auf die nicht dargestellten Anschlußleiter aus baugleichen Leiterformteilen **9**. Die beiden äußeren Verbindungsleiterschichten **12, 13** werden axial erst aufgepreßt, wenn alle Verbindungsstellen der beiden inneren Verbindungsleiterschichten **10, 11** verschweißt oder verlötet sind und ein ausreichend kleiner Innenwiderstand der beiden Leiterstränge nachgewiesen wurde. Weiterhin besteht die Möglichkeit, die Isolierbeschichtung der Einheitenenden und der äußeren Verbindungsleiter **9** erst nach dem Zusammenfügen der Leiterteile im axial auseinandergeschobenen Zustand aufzubringen, indem der Leiteraufbau z.B. in einen Isolierlack getaucht wird.

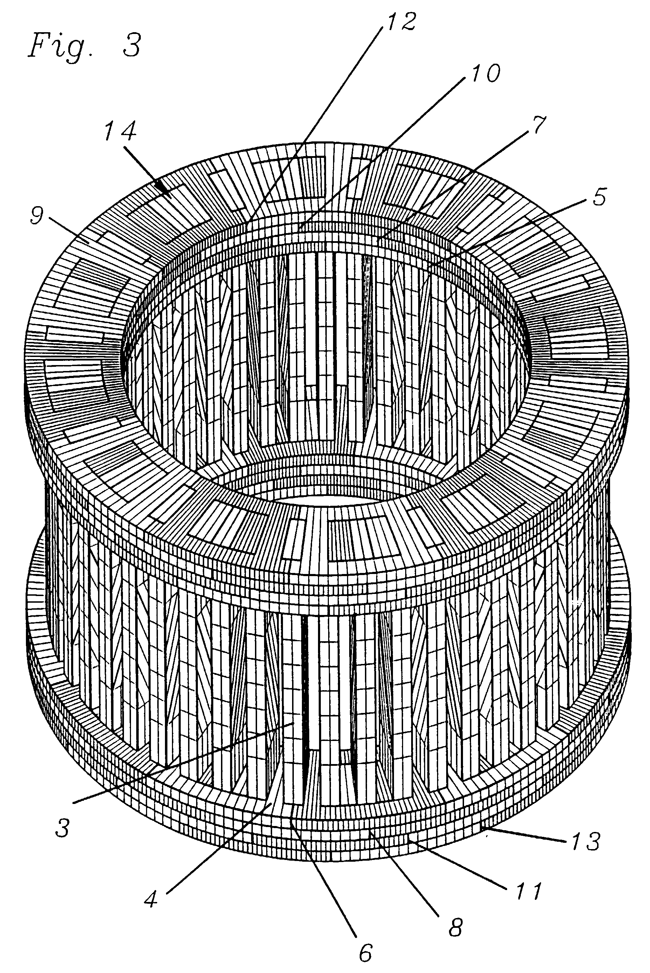

**Figur 3** zeigt die funktionsbereite, selbsttragend vorgefertigte Stabwicklung **14** nach dem axialen Zusammenschieben der vier Leiterstränge. Über die vollständige Raumausnutzung in den kompakten Wickelköpfen sind neben kurzen Leiterlängen auch große Leiterquerschnitte realisierbar, wodurch die Leistungsdichte und/oder der Wirkungsgrad erheblich gesteigert wird.

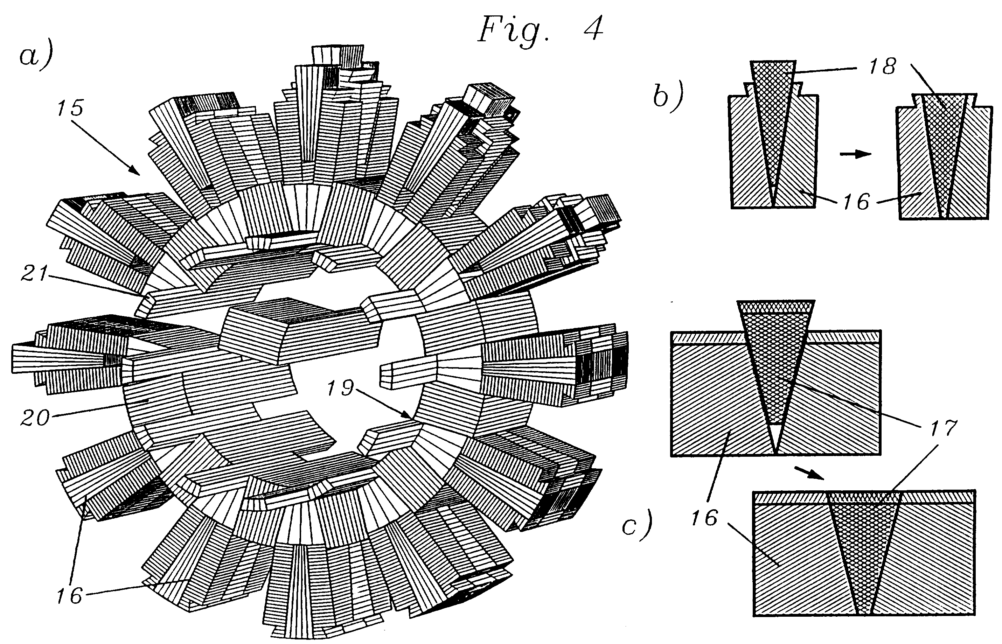

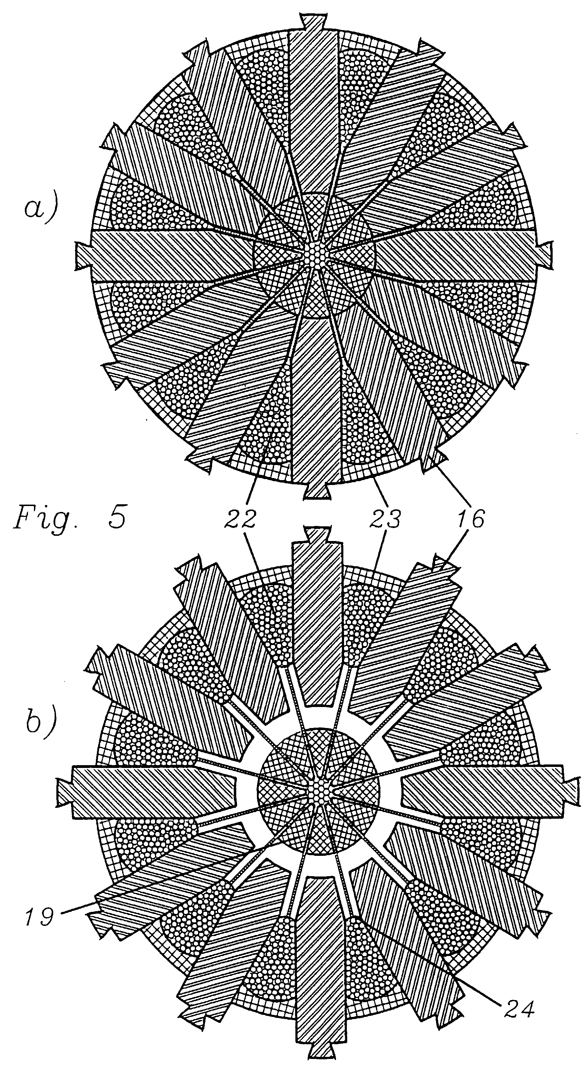

In den **Figuren 4** und **5** werden Arbeitsschritte und Vorrichtungselemente zur selbsttragenden Vorfertigung einer kompakten Drahtwicklung dargestellt.

Die in **Figur 4** dargestellte Vorrichtung **15** dient zur Herstellung einer selbsttragenden Drahtwicklung für eine dreiphasige, vierpolige Radialluftspaltmaschine. Nachdem Drahtspulen (nicht dargestellt) in die zwölf baugleichen Zahnteile **16** locker eingelegt und mit einem Bindemittel, z.B. einem Gießharz, getränkt wurden, werden die Zahnteile durch das radiale Einpreßen von Längskeilen 17 axial verlängert und durch Querkeile **18** verbreitert. Die Drahtspulen werden hierdurch vor dem Aushärten des Bindemittels in den Nuten zusammengepreßt und in Längsrichtung gespannt, wodurch die Drähte auch in den Wickelköpfen gestrafft und verdichtet werden. Der für den magnetischen Fluß relevante Zahnquerschnitt wird soweit vergrößert, wie es die Elastizität der Drahtisolierung zuläßt. In **Fig. 4a** sind die Zahnteile **16** sowohl in ihrer Anfangs als auch in ihrer Endstellung dargestellt, wobei in dieser prinzipiellen Funktionsdarstellung von der Vorrichtung nur noch der Innenring **19** abgebildet ist, der aus zwei Sektorbauformen **20, 21** besteht, die von einer elektrischen oder hydraulisch Stelleinrichtung radial und axial bewegbar sind.

In **Figur 5** wird eine Drahtwicklung **22** vor dem Aushärten des Bindemittels in einer anderen Vorrichtungsvariante zusätzlich radial verpreßt, indem zunächst ein klauenartig ausgestalteter Hüllkörper **23** axial aufgepreßt wird, der die Drähte radial nach innen drückt. Anschließend werden beim radialen Nachaußenziehen der Zahnteile **16** flexible Nutbodenbleche **24** hydraulisch nach außen gedrückt, wodurch auch eine Verdichtung der Drähte am Nutboden stattfindet. Alle Vorrichtungsteile **16** bis **24** verharren nun in der Endposition, bis das Bindemittel ausgehärtet ist. Das ausgehärtete Bindemittel nimmt die Verspannung der Drahtwicklung auf und gewährleistet einen selbsttragenden Leiteraufbau, nachdem die mit einer nichthaftenden Beschichtung versehenen Zahnteile **16** radial nach außen und die Segmente des Innenrings **19** axial aus der Drahtwicklung gezogen wurden. Die Drahtwicklung **22** wird nun aus der Vorrichtung genommen und die Vorrichtungsteile nehmen anschleißend - ggf. automatisch gesäubert - wieder ihre Anfangsposition ein, um die nächste Wicklung zu komprimieren.

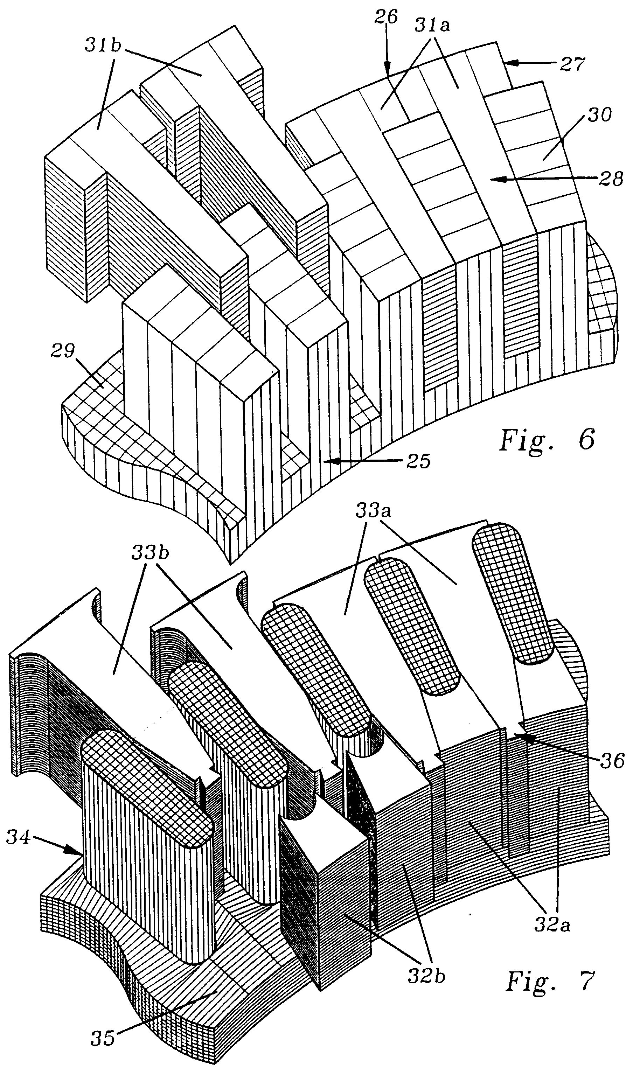

**Figur 6** zeigt einen fünf Nutteilungen umfassenden Umfangsausschnitt einer, zum Zweck der Anschaulichkeit, axial halbierten selbsttragenden Stabwicklung **25** für einen weichmagnetischen Körper **26**, dessen Joch **27** radial außerhalb der Zähne **28** angeordnet ist. Durch eine gekreuzte Schraffur ist unten ein Wickelkopf **29** schematisch dargestellt und jeweils fünf radial übereinanderliegende Nutstäbe **30** füllen einen Nutraum aus. Der weichmagnetische Körper **26** wird erst nachträglich durch das radiale Einschieben T-förmiger weichmagnetischer Segmente **31a,b** zusammengesetzt. Während die beiden rechts angeordneten T-förmigen Segmente **31a** sich bereits in ihre endgültigen Position befinden und somit im Jochbereich **27** flächig aneinanderliegen sind die links folgenden beiden Segmente **31b** beim Einschiebevorgang dargestellt. Alle den weichmagnetischen Körper bildenden Segmente **31a,b** sind baugleich.

**Figur 7** zeigt in einer ähnlich zu Fig. 6 aufgebauten Darstellung Jochsegmente **32a,b** und Zahnsegmente **33a,b** beim Einsetzen in eine selbsttragend vorgefertigte Drahtwicklung **34,** mit innerhalb der Zähne angeordnetem Joch. Die Drahtwicklung **34** füllt den Nutraum mit hohem Füllfaktor aus und der Wickelkopf **35** ragt radial in den dem Joch axial vorgelagerten Raum. Nur die beiden rechts dargestellten Jochsegment **32a** sind bereits endgültig positioniert, während die beiden links folgenden Jochsegment **32b** radial von innen nach außen eingesetzt werden. Die beiden links dargestellten Zahnsegmente **33a** sind radial ebenfalls schon vollständig eingeschoben, wogegen die beiden rechts dargestellten Zahnsegmente **33b** sich noch teilweise außerhalb des Leiteraufbaus befinden. Zur Vergrößerung der Kontaktflächen zu den Jochsegmenten **32a,b** endet die Zahnsegmente **33a,b** nicht auf Höhe des Nutbodens. Indem die zunächst abnehmende Breite der Zahnsegmentenden **36** gegen Ende wieder zunimmt, wird der gesamte Aufbau durch einen abschließend axial aufgepreßten Trägerring radial zusammengehalten.

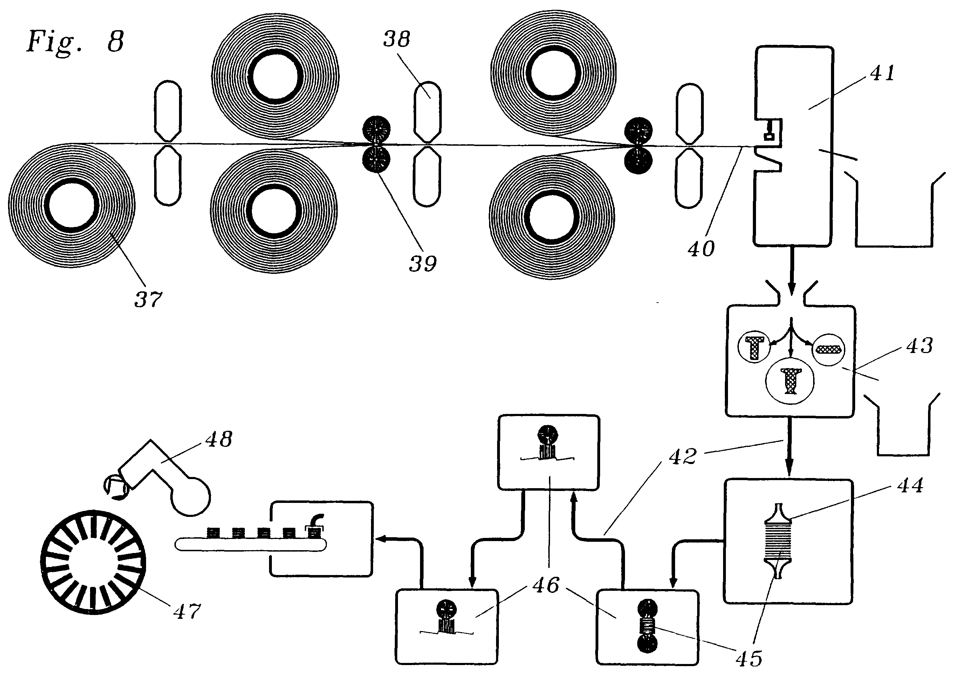

In **Figur 8** wird das Herstellungsverfahren für den weichmagnetischen Körper schematisch dargestellt. Ausgangsprodukt sind dünne Bänder aus weichmagnetischem Material, die in einem automatisierten Fertigungsband von mehreren Trommeln **37** abgerollt und von Beschichtungsanlagen **38** flächig mit Isolier- und Klebematerial versehen sowie von Walzen **39** zu einem stabilen Vielschichtband **40** zusammengepreßt werden. Das Vielschichtband läuft direkt in eine Laserschneid- oder Stanzmaschine **41**, in der Reihe um Reihe die weichmagnetischen Segmente herausgearbeitet werden. Die Dicke des Vielschichtbandes **40**, bzw. die Anzahl der zusammengefügten Schichten kann je nach der Größe der Segmente variabel eingestellt werden. Von Transportbändern **42** werden die Bauteile auf Maschinen **43** verteilt, in denen zuerst die fehlerhaften Teile aussortiert sowie die fehlerfreien Segmente abgezählt und in einer Vorrichtung **44** ausgereichtet zu Segmentpaketen **45** mit der gewünschten Länge zusammengefügt werden. Die Oberflächenrauheit, die durch Fertigungstoleranzen beim Zusammenfügen der Stanzteile zu Segmentpaketen **45** entstehen, wird in Nachbearbeitungsstufen **46** abgetragen. Mit den vielschichtigen Segmentpaketen **45** wird abschließend ein selbsttragend vorgefertigter Leiteraufbau **47** von einem Montageroboter **48** bestückt.

## Patentansprüche

1. Verfahren zur Herstellung einer mehrphasigen elektrischen Maschine mit sich überlappenden Phasensträngen und mindestens einem segmentierten, genuteten weichmagnetischen Körper, wobei die weichmagnetischen Segmenten (33, 45) in eine vorgefertigte Wicklung (14, 22, 25, 34) eingesetzt werden,
**dadurch gekennzeichnet,** daß Wicklung (14, 22, 25, 34) in einer Vorrichtung (15), vor dem Aushärten eines Bindemittels verdichtet wird, wobei der für den magnetischen Fluß relevante Zahnquerschnitt vergrößert wird.

2. Verfahren zur Herstellung einer mehrphasigen elektrischen Maschine nach Anspruch 1,
**dadurch gekennzeichnet,** daß Formspulen oder Nutstäbe (3, 30) einer Stabwicklung (14, 25) nach dem Verschweißen oder Verlöten axial zusammengeschoben werden.

3. Verfahren zur Herstellung einer mehrphasigen elektrischen Maschine nach Anspruch 1,
**dadurch gekennzeichnet,** daß nachdem alle Leiter einer Drahtwicklung (22) locker in eine Vorrichtung (15) gelegt wurden, der gesamte Leiteraufbau mit einem Bindemittel getränkt wird und die Leiterdrähte vor dem Aushärten des Bindemittels durch eine Querschnittsvergrößerung der den Zähnen entsprechenden Vorrichtungsteile (16) komprimiert werden.

4. Verfahren zur Herstellung einer mehrphasigen elektrischen Maschine nach Anspruch 1,
**dadurch gekennzeichnet**, daß nach dem radialen Einsetzen der weichmagnetischen Segmente ein Trägerring axial aufgeschoben wird, der die Zahnsegmente (33a,b) radial im Leiteraufbau (34) fixiert, indem der Trägerring die Enden (36) der Zahnsegmente durch seine trapezförmigen Nuten erfaßt.

5. Verfahren zur Herstellung einer mehrphasigen elektrische Maschine nach Anspruch 1,
**dadurch gekennzeichnet**, daß die Zahn- und Jochsegmenete in einer vollautomatisierten Produktionsanlage aus einem Vielschichtband (40) aus kornorientierten oder armorphen Eisenbändern geschnitten, zu axial geschichteten Segmentpaketen (45) zusammengefügt und in einen selbsttragend vorgefertigten Leiteraufbau (47) eingesetzt werden.

## Claims

1. A process for manufacturing a multiphase electric machine with overlapping phase conductors and at least one segmented, grooved soft magnetic body, wherein the soft magnetic segments (33, 45) of said grooved soft magnetic body beeing inserted into a self-supporting prefabricated winding (14, 22, 25, 34),
wherein prior to the setting of a binding agent said winding (14, 22, 25, 34) is compressed in a device (15) in a manner that the cross section of the teeth relevant for the magnetic flux is enlarged.

2. A process for manufacturing a multiphase electric machine as recited in claim 1 wherein pulled coils or groove bars (3, 30) of a bare winding (14, 25) are axially pushed together after welding or soldering.

3. A process for manufacturing a multiphase electric machine as recited in claim 1 wherein after all conductors of a wire winding (22) have been placed loosely into a device (15), the entire conductor construction is impregnated with a binding agent and the conductor wires, prior to setting of the binding agent, are compressed by parts of the device (16) which correspond to the enlargement of the cross section of the teeth.

4. A process for manufacturing a multiphase electric machine as recited in claim 1 wherein, after insertion of the soft magnetic segments, a carrier ring is pushed on, said carrier ring radially fixing the tooth segments (33a,b) in the conductor construction (34) by enclosing the ends (36) of the tooth segments in its trapezoidal grooves.

5. A process for manufacturing a multiphase electric machine as recited in claim 1 wherein the tooth and yoke segments are cut in a fully automated manufacturing facility from a multilayer strip of grain-oriented or amorphes iron strip, joined into axially stacked packets (45), and inserted into a self-supporting prefabricated conductor construction (47).

## Revendications

1. Procédure de fabrication d'une machine électrique polyphasée avec des conducteurs de phase en superposition et avec au moins un corps magnétique doux segmenté à rainures dont les segments magnétiques doux (33, 45) sont insérés dans un bobinage (14, 22, 25, 34) préfabriqué,
caractérisée en ce que le bobinage (14, 22, 25, 34) est comprimé dans un dispositif (15) avant que le produit liant ne durcisse, de façon que la section transversale des dents-segments, portant directement sur le flux magnétique, subisse un agrandissement.

2. Procédure de fabrication d'une machine électrique polyphasée d'après la revendication 1,
caractérisée en ce que dans un bobinage de barreau, les bobines du moule ou les barreaux dans les rainures sont poussés les uns sur les autres de manière axiale après la soudure ou le brasage.

3. Procédure de fabrication d'une machine électrique polyphasée d'après la revendication 1,
caractérisée en ce qu'après que tous les conducteurs d'un bobinage de fil électrique soient mis de manière souple dans un dispositif, la construction entière de conducteur est impregnée d'un produit liant et que les fils électriques du conducteur sont comprimés avant le durcissement du produit liant par un agrandissement de la coupe transversale des pièces du dispositif (16) qui correspondent aux dents.

4. Procédure de fabrication d'une machine électrique polyphasée d'après la revendication 1,
caractérisée en ce qu'après la mise en place de manière radiale des segments magnétiques doux, on fait glisser un anneau porteur de manière axiale, qui fixe les segments de dents dans la construction du conducteur de manière radiale, dans laquelle l'anneau porteur couvre les extrémités des segments de dents grâce à ses rainures en forme de trapèze.

5. Procédure de fabrication d'une machine électrique polyphasée d'après la revendication 1,
caractérisée en ce que les segments de dents et de conclusion dans une installation de production entièrement automatisée sont coupés par une bande à couches multiples de bandes de fer à magnétique orientés ou bien amorphes, assemblés aux paquets de segments (45) mis en couches de manière axiale, et mis dans une construction de conducteur (47) préfabriquée et se supportant elle-même.
